# EUROPEAN PATENT APPLICATION

(11) **EP 2 014 706 A1**
(43) Date of publication of application: **14.01.2009**
(21) Application number: 07010016.9
(22) Date of filing: 19.05.2007
(51) Int. Cl.: C08K 5/09, C09D 5/20, C09D 7/12, C09D 131/02

(54) **Aqueous polymeric dispersion containing an organic acid**

(71) Applicant: CRAY VALLEY B.V., 6971 AC Brummen (NL)
(72) Inventor: Brinkman, Hein, 7218 La Almen (NL); Gentilhomme, Philippe, 95190 Goussainville (FR); Leveque, Virginie, 60200 Compiegne (FR); Saija, Leo, 42011 Bagnola in Piano(RE) (IT)
(74) Representative: Killis, Andréas

(57) **Abstract**

The invention relates to an aqueous polymeric dispersion where :
- it comprises :
a) at least one polymer in aqueous dispersion, having a minimum film forming temperature (MFFT) between 0 and 100°C, and
b) 0.05 to 30% by weight with respect to the said aqueous dispersion a), of at least one organic carboxylic acid in C₁ to C₂₅, or their mixtures,

- the said organic carboxylic acid b) and its content in the said aqueous dispersion is selected to be compatible with the said aqueous polymeric dispersion as such and with the said polymer as polymer itself,
- the said acid b) is in its acid form.

The invention does also cover a process of preparation, an end-use composition comprising the said aqueous polymeric dispersion for various specific uses in : paints, varnishes, inks, glues, adhesives, fibre sizing compositions or textile or leather treatment compositions, or food coatings or packagings.

## Description

The present invention relates to specific aqueous polymeric dispersions of polymers with coalescing and/or plasticizing agents for reducing the minimum film-forming temperature (MFFT) of the dispersions and optionally for decreasing the glass transition temperature (Tg) of the polymers, based on specific acids, for specific coating or adhesive applications or other applications.

EP 113 443 discloses the preparation of aqueous dispersions of plasticized polymers by processes other than emulsion polymerisation. These polymeric dispersions comprise particles of a water-insoluble thermoplastic polymers and a plasticizing composition constituted of a water-soluble salt of a carboxylic acid in an amount sufficient to emulsify the polymer and to stabilize the dispersions. They may be coalesced by lowering the pH until the organic acid salt is converted to the acid form. But this means that in the free acid form, the said organic acid exhibits the disadvantage of being no longer able to stabilize the said polymeric dispersion.

FR 1 053 706 describes films of polyvinyl acetate emulsions which can be dried at lower temperatures than Tg, the aspect and the properties of these films differing not at all from those dried at higher temperatures, when small quantities of acetic acid are added to the polyvinylic polymeric emulsion.

US 3,287,300 discloses polyvinyl ester emulsions comprising aliphatic branched monocarboxylic acids in order to depress the MFFT, without causing any coagulation. US 3,287,300 also discloses that lower range carboxylic acids cause coagulation and very unpleasant odour, which renders them completely unsuitable for industrial purposes.

Water based acrylic and vinylic homopolymer and copolymer dispersions are usually obtained by emulsion polymerisation in presence of anionic and/or non ionic surfactants. The resulting lattices are characterised by specific MFFT and mechanical properties depending on their monomer composition and type of structure. The possible presence of high amounts of protective colloids, more particularly in the case of waterborne dispersions of vinyl acetate homopolymers and copolymers, may decrease the MFFT due to the plasticizing effect of the water with regards to these hydrophilic materials (colloids). But in the most common applications (in wood adhesives, for example), the use of big amounts of these protective colloids, can influence negatively the water resistance. Quite often, in order to allow their application at designed temperatures and/or to reach the required final properties it may be necessary to modify such polymer dispersions in terms of MFFT and/or Tg, by using suitable coalescing solvents and/or plasticizers. In the case of coalescing solvents, the reduction of MFFT is usually obtained by the use of specific organic compounds (coalescing solvents) which are able to favour the particle coalescence at lower temperature. The general use of high boiling point organic solvents, like glycols or glycol ethers may have a negative influence on the final application because of their tendency to partially remain in the polymer film, for example the creep resistance being low in wood adhesives.

In the case of plasticizers not only the MFFT, but also the Tg and the mechanical properties will be permanently affected. Due to their chemical nature and their good compatibility with a large range of different polymer dispersions, phthalates are still the most used class of plasticizers. Nevertheless, phthalates are considered to be harmful for health and environment so there is a need to find a suitable alternative solution.

The general technical problem to solve with respect to prior art is to find a suitable selection of coalescing agents having higher efficiency at lower contents and in more particular cases comprising among them permanent plasticizers, enabling by the MFFT suitable decrease, the film formation (or filmification) ability to a broad range of polymeric aqueous dispersions, based on either hydrophilic and/or hydrophobic polymers. Such a filmification is enabled for relatively difficult general cases, comprising filmification for higher Tg (> 20°C) polymer dispersions, for improved higher mechanical performances and for higher blocking resistance, or use at low temperature conditions (< 10°C), and in a broad range of applications, often requiring multiple specific applicative performances to be fulfilled by the final product issued from the said dispersions and more particularly lower toxicity complying with the EU and US regulations, more specifically for direct food contact, is required in addition to other performances. Polymer dispersions can be classified depending on their sensitivity to water in either hydrophilic (otherwise called "polar polymers") or hydrophobic (otherwise called "non polar polymers"), on the base of a definition according to the present invention, further explained below in the present description. Of course, it is a difficult task to find on the base of prior art, coalescing agents suitable for both hydrophilic and hydrophobic polymer dispersions, with higher efficiency at lower contents, as now proposed by the present invention.

Generally acting as coalescing agents by reducing MFFT, the said agents may additionally, firstly act as temporary plasticizers of the polymer to favour the film formation (otherwise called filmification) of the aqueous polymeric dispersions, for which it is difficult to form a film at room/low temperature conditions, without affecting the final mechanical performances. Temporary plasticizers according to this first case have specifically higher volatility (lower molecular weight range) and consequently, after efficiently contributing to the film formation mechanism, they can be released from the formed polymeric film in a relatively short time, thus allowing the relative quick recovering of the initial (proper) polymer mechanical properties. Such agents are specifically targeted for applications in certain types of adhesives, specific food coatings and surface protective coatings. In a second possible case, in addition to their general role in promoting film formation, they may act as permanent plasticizers (affecting both MFFT and Tg of the polymer), thus modifying the proper polymer mechanical properties and the resulting applicative performances of polymeric films, resulting from the corresponding aqueous dispersions containing these agents.

The present invention provides a satisfactory solution to the problem of improving the efficiency of the coalescing effect at reduced contents of coalescing agents, with optionally the possibility to recover the intrinsic polymer mechanical properties. Indeed, the solution of the specific problem of the invention does fulfil an excellent compromise in terms of efficiency of the coalescing effect, of compatibility and of homogeneity of the dispersion, and of the film final applicative performances, with an effective control of the final mechanical and viscoelastic polymeric performances.

The first subject-matter of the present invention is an aqueous polymeric dispersion.

The second subject-matter relates to a process for the preparation of the said aqueous polymeric dispersion.

The invention does also relate to a composition comprising at least one aqueous polymeric dispersion as defined according to the invention.

Finally, the invention concerns the use of such a dispersion in an aqueous paint or varnish or ink or glue or adhesive or fibre sizing composition or a leather or a textile treatment composition or in a food protective coating.

More specifically, the first subject-matter of the invention is an aqueous polymeric dispersion comprising :
a) at least one polymer in aqueous dispersion, having a MFFT between 0 and 100°C, preferably from 5 to 50°C, and
b) from 0,05 to 30% by weight with respect to the said aqueous dispersion a) of at least one organic carboxylic acid in C₁ to C₂₅, and their mixtures, preferably their binary or ternary mixtures,
the said organic carboxylic acid and its content in the said aqueous dispersion being so selected to be compatible with the said aqueous polymeric dispersion a) as such (aqueous dispersion), and with the said polymer as polymer itself, the said acid b) being in its acid form.

The term "organic carboxylic acid in C₁ to C₂₅" should be interpreted as meaning organic carboxylic acids bearing at least one, preferably one or two and more preferably one carboxylic acid group, the indicated carbon atom numbers corresponding to the total C number including carboxylic groups (for example C₂ indication corresponding to acetic acid).

The term "acid form" should mean that the pH conditions of the said (initial) aqueous dispersion a) and of the aqueous dispersion resulting from the addition of b) should be adjusted to finally have the said acid form. Generally, this means that the pH should be adjusted to be lower than the corresponding pKa constant of the said acid b) (characteristic corresponding to the acidity constant of the said acid, well known characteristic to a man skilled in the art). The solids content of the said dispersion as defined according to the present invention may vary from 35 to 70% and preferably from 40 to 60%. The % content of the said acid b) is expressed in weight of pure acid.

The term "compatible with the said aqueous dispersion a)" should be interpreted as meaning that the said organic carboxylic acid can be added in the relative proportions thereof present in the said dispersion, by forming an homogeneous dispersion without phase separation or sedimentation resulting from this addition and mixing, which should correspond to a coagula or agglomerate or grit content, lower than 200 ppm on a 100 MESH (about 150 microns) filter. As it concerns the term "compatible with the said polymer as polymer itself", it should be interpreted as meaning that after film formation (by coalescence of the resulting "aqueous dispersion a) + b)"), the resulting dry film should be homogeneous, without any visual presence of phase separation or of segregates (no film defects due to this phase segregation).

Depending on the targeted applicative performances and the initial (proper) polymer Tg of the said dispersion, the organic carboxylic acid content with respect to dispersion a) may vary from 0.05 to 15%, preferably from 0.05 to 5%, and more preferably from 0.5 to 3% by weight with respect to the total weight of the said aqueous dispersion. Higher range chain lengths (C₉ to C₂₅ preferably C₁₆ to C₂₅) may be particularly suitable for facilitating the film formation at room/low temperature conditions and for giving permanent plasticizing effect of aqueous polymeric dispersions, while lower range chain lengths may be more suitable for temporary plasticizing effect, enabling the recovering of the mechanical performances on the final polymer film.

Preferably, the said organic carboxylic acid b) is linear. More preferably, the said acid b) is in the range from C₉ to C₂₅, even more preferably from C₁₆ to C₂₅, and optionally it may bear at least one ethylenic unsaturation, this last category of acids being under liquid state at room temperature, they show an easier workability. Particularly preferred as acid b) is a linear acid in the C₉ to C₂₅, more particularly in the C₁₆ to C₂₅ range and it bears one or two or three ethylenic unsaturations.

As example of particularly preferred acids in the C₉ to C₂₅ range, suitable for the present invention, we may cite the following ones : capric, lauric, oleic, linoleic, linolenic, ricinoleic, caproleic, vaccenic, palmitoleic acids. As more preferred in the C₁₆ to C₂₅ range, we may cite the following ones : oleic, linoleic, linolenic, ricinoleic, myristoleic, palmitoleic acids. More preferably the said acids are mixtures of acids which may be commercially available products or blends of them, comprising at least 50 and more preferably at least 70% % w/w of C₁₆ and/or C₁₈ acids.

According to a last preferred embodiment, the said organic carboxylic acid can be a mixture of at least one C₁ to C₄ acid with at least one C₁₆ to C₂₅ acid preferably bearing at least one ethylenic unsaturation. An adjusted mixture (by selecting the acid length and/or content and/or the total number of acids participating in the mixture) may enable finely tailored applicative performances adapted to particular cases presenting either compatibility problems or applicative performance reduction, if only one acid is used alone. In fact, this kind of problems may be met, depending on, either the acid nature and content and/or on the polymer nature on which is based the said aqueous dispersion a).

In fact, the said polymer of the said aqueous dispersion a) according to the present invention, may be a hydrophilic (also called polar) or a hydrophobic (also called non polar). The classification of "hydrophilic" and of "hydrophobic" polymers according to the present invention is defined on the basis of a calculated "Hydrophilic Index" "HI" as defined below, in the experimental part. Generally, we will consider as "hydrophilic polymers" polymers with calculated HI higher than 15 (expressed in g/l).

In the first case, where the said polymer is a hydrophilic one, the said acid b) is preferably selected from C₁ to C₈ monocarboxylic or dicarboxylic acids, and more preferably from formic, acetic, valeric (pentanoic), glutaric (pentanedioic), caproic (hexanoic), octanoic, adipic (hexanedioic) acids, and more preferably from the formic acid or the acetic acid or the propanoic acid, or mixtures of at least one C₁ to C₄ acid with at least one C₁₆ to C₂₅ acid, the latter preferably bearing at least one ethylenic unsaturation. More particularly, in such a case (polar polymer), the said organic carboxylic acid can be a monocarboxylic or dicarboxylic C₁ to C₈ acid, under the condition that the pH of the said aqueous dispersion resulting from the addition of b) should be adjusted to be lower than the pKa of the said organic carboxylic acid.

In the second case, where the said polymer is a hydrophobic one, the said acid b) is preferably selected from C₉ to C₂₅ monocarboxylic or dicarboxylic acids and more preferably from C₁₆ to C₂₅.

The said polymer of the aqueous dispersion a) may be either vinylic homopolymers and/or copolymers or acrylic homopolymers and/or copolymers. More specifically, the said vinylic homopolymers are homopolymers of vinyl esters (vinyl alcohol esters), such as vinyl acetate or vinyl propionate or vinyl butyrate or vinyl versatate, and the said copolymers are copolymers of vinyl esters with at least one of the following comonomers : ethylene, maleic acid or esters, or acrylic comonomers. As it concerns the said acrylic homopolymers and/or copolymers, they are homopolymers and/or copolymers of acrylic esters and their copolymers are those with styrene and/or vinyl esters as defined above.

The said polymer is considered to be a hydrophilic polymer when the Hydrophilic Index HI as defined below in the description is higher than 15 g/l. Suitable hydrophilic polymers may include among others : vinyl acetate homopolymers and/or vinyl acetate copolymers having predominant vinyl acetate content (meaning "vinyl acetate content" > 50% w/w on the total monomer weight).

The aqueous polymeric dispersion according to the invention is obtainable by emulsion polymerisation of a monomeric composition comprising at least one ethylenically unsaturated monomer, these monomers being the precursors of the polymeric structure as defined above. The said ethylenically unsaturated monomer may be at least one of :
- (meth)acrylic acid esters of C₁ to C₁₈ monoalcohols, such as 2-ethylhexyl (meth)acrylate, butyl (meth)acrylate, ethyl(meth)acrylate, or
- (meth)acrylate diesters or monoesters of C₂ to C₆ diols, including corresponding (C₂-C₆) hydroxy alkyl (meth)acrylates, or
- urethane acrylates or epoxy acrylates or polyester or polyether acrylates,
- functional monomers such as : (meth)acrylic acid or anhydride, (meth)acrylamide, glycidyl (meth)acrylate, N-methylol (meth)acrylamide, allyl (meth)acrylate, acetoacetoxy ethyl (meth)acrylate, diacetone acrylamide, diacetone (meth)acrylate, (meth)acrylonitrile, itaconic acid or anhydride, maleic acid or anhydride, fumaric acid, vinyl glycidyl ether
- vinyl alcohol esters, such as vinyl acetate, vinyl versatate, vinyl propionate, vinyl butyrate, and vinyl acetoacetate, allyl acetoacetate,
- vinyl aromatic monomers such styrene, or
- olefins such as ethylene
- maleates or diallyl maleates esters of C₂ to C₁₀ alcohols.

The said aqueous polymeric dispersion is stabilized with at least one surfactant, selected from anionic and/or non-ionic surfactants and may be further stabilized with either one protective colloid around the polymeric particles, selected from : partly or completely hydrolysed polyvinyl acetate, also called polyvinyl alcohol or cellulose derivative.

A second subject-matter of the present invention concerns a process for preparing the said aqueous dispersion of the invention.

The said process comprises at least the following essential steps :
i) preparing an aqueous polymeric dispersion a) as defined above according to the invention, either by emulsion polymerisation or by dispersing in water a preformed polymer
ii) adding in the said aqueous polymeric dispersion at least one organic carboxylic acid b) as defined above according to the invention, and when the said acid is under solid state at room temperature heating it to a liquid state before adding it at the same temperature to the preheated aqueous dispersion a), and optionally previously to adding it, diluting it in water
iii) mixing aqueous dispersion a) and acid b) to obtain an homogeneous aqueous dispersion,
iv) optionally, adjusting the pH of the said aqueous dispersion to favour the acid form of the said carboxylic acid b), preferably for short chain C₁-C₈ acids.

Another subject-matter of the invention is an end-use composition comprising at least one aqueous polymeric dispersion as defined above according to the invention, or as obtainable by the above-defined process of preparation according to the present invention. "End-use composition" is meaning "applicative composition or formulation for end-use in specific applications". The said end-use composition may be an aqueous paint or varnish or ink or glue or adhesive composition (formulation) or it may be a fibre (such as fibre glass) sizing composition or a leather or a textile (woven or non-woven fibres) treatment composition or a protective food coating composition.

According to a specific embodiment of the end-use composition, the invention comprises an aqueous dispersion a) as defined according to the invention, with an acid b), selected from at least one of : formic acid or acetic acid or propanoic acid or lactic acid. Such an end-use composition is more particularly suitable for an aqueous adhesive or glue composition for wood or for food protective coatings, more particularly food protective coatings for cheeses or sausages. In this case, the polymer of the said polymeric aqueous dispersion a) is preferably a hydrophilic (polar) polymer which is defined as such, by a hydrophilic index HI (see the definition below) of at least 15 g/l. In the case of food coating application and more particularly for cheese coating, the commonly used dispersions are copolymers of vinyl acetate and maleate, preferably di-butyl maleate in proportion 75/25 to 55/45, stabilized with surfactant as well as protective colloids, polyvinyl alcohol or cellulose derivatives, polymerised in emulsion with Tg from 25 to 5°C, MFFT from 15 to 5°C. These copolymers are generally formulated with dyes or pigments, thickeners, acids, bases, salts and anti-mycotic agents.

According to another particular embodiment of the end-use composition of the present invention, it comprises an aqueous dispersion, as defined above according to the invention, the said dispersion comprising an organic carboxylic acid b) selected from C₉ to C₂₅ acids and more preferably C₁₆ to C₂₅ acids. The said end-use composition is more particularly and preferably a packaging adhesive composition or a protective coating composition, including removable protective coating composition, more specifically in food applications such as in food coatings or packagings or in temporary protection of specific substrates.

Another subject-matter of the invention is the use of at least one aqueous dispersion as defined above, according to the invention, in end-use compositions, more particularly in aqueous coatings compositions selected from paints, varnishes, inks, or for use in aqueous glues or adhesive compositions, or in fibre sizing compositions or in textile or in leather treatment compositions, or in food coatings or in packagings or in temporary protection of specific substrates.

More particularly, when the organic carboxylic acid b) is selected from formic acid or acetic acid or propanoic acid or lactic acid, the most suitable use is in aqueous adhesives or glue compositions for wood and in food coating compositions, while when it is selected from C₉ to C₂₅ acids, preferably from C₁₆ to C₂₅ acids, the most suitable use is either in packaging adhesives or in protective coatings, including removable protective coatings either for food coatings or packaging or for specific substrate temporary protection, to prevent oxidizing contact with air or to prevent exposure to light.

A final subject-matter of the present invention is coated or treated substrates resulting from the application and filmification of at least one layer of at least one end-use composition, including aqueous coating or adhesive or glue or other treatment compositions as defined above according to the present invention, on a substrate, more particularly on substrates selected from wood, metal, plastic, paper, cardboard, glass, leather, textile fibres (including woven and non-woven), or natural or synthetic fibres or food, such as cheeses, sausages, fruits. More specifically, a removable protective coating is part of the present invention, as resulting from the application and filmification of at least one layer of at least one end-use protective coating composition of the present invention, comprising at least one polymer dispersion as defined according to the present invention, and comprising C₉ to C₂₅, preferably C₁₆-C₂₅ acids b) more preferably bearing at least one ethylenic unsaturation, or optionally mixtures of C₁ to C₄ with C₁₆-C₂₅ acids b) bearing at least one ethylenic unsaturation.

The following examples can illustrate the present invention and its performances without limitation of covering.

### EXPERIMENTAL

### Preparation and characterization of the aqueous polymeric dispersions :

- Addition conditions and compatibility test of the acid b) : with the aqueous dispersion a) and with the polymer on which it is based
   The acid must be chosen in order to be compatible with the polymer in the liquid state and with the dispersion a). "Compatible with the dispersion a)" means that when added with acid b), the said dispersion a) must be stable in terms of pH and in terms of viscosity evolution in time, showing no grits (according to n° standard method ISO 4576), no demixing, which means neither viscosity evolution in time nor flocculation. "Compatible with the polymer" means that when filmified in the solid dry state the polymer film obtained, after drying, is transparent, homogeneous and showing no visual defects.
   Liquid acids, more particularly short chain acids as C₁-C₈ acids, are slowly added in lattices (dispersion a)), under stirring, to avoid flocculation phenomena in the dispersion, sensitive to acid strength. In such a case, they may be diluted in water, before adding in dispersion a).
   For the addition of acids under powder form, it is easier to heat the dispersion a), around 60°C, prior to the acid incorporation under stirring. In alternative, solid acids, like decanoic acid, must be heated at a temperature higher than their melting point before being incorporated in the pre-heated dispersion a). If the dispersion a) is too much sensitive to acid strength, it can be previously diluted in water.
- pH
   The measures have been carried out following the ISO 976 method.
- Solids content
   According to ISO 3251 method.
- Viscosity
   According to ISO 2555 method.

### Characterization of the polymeric films :

The coalescing and plasticizing effects of the different acids b) are tested in polymer dispersions a), based on different polymer compositions, by measuring the minimum film-forming temperature (MFFT), glass transition temperature (Tg) and mechanical properties (tensile strength and elongation at break) corresponding to the related formulations.
- Differential Scanning Calorimetry (DSC)
   The samples from the dispersions are dried in an air-conditioned room (23°C/50% of relative humidity RH) to evaporate the volatile contents. The Tg measurements are made on a DSC7 device (from Perkin Elmer) using a heating rate of 10°C/min with two consecutive scans from - 40 to 120°C. The first scan allows to eliminate the residual solvent, the relaxation and the physical ageing of the polymer, the related Tg values being determined from the second scan.
- Minimum Film Forming Temperature (MFFT)
   The measures have been carried out following the ISO 2115 method.
- Tensile strength and elongation at break
   Tested specimen have been prepared according to the DIN 53448B method from the original dispersions. They are dried in an air-conditioned room (23°C/50% RH) to evaporate the volatile contents. Films are around 1000 µm thick and punched specimens have useful dimensions of 5x30 mm. Tensile strength and elongation at break are measured with a dynamometer Zwick Z020 equipped with a 200N cell in an air-conditioned room (23°C/50% RH) at 50 mm/min. Exact thickness of each sample is taken into account for calculations.

### Organic carboxylic acids b) in various polymeric dispersions a), and Hydrophilic character (Index) of the corresponding polymer

In order to have an effect on decreasing the MFFT, the acid must be chosen with respect to its hydrophilic character, taking into account the hydrophilic character of the polymer. Short carbon chain acids are the most hydrophilic, and long carbon chain acids are the most hydrophobic.

In consequence, short chain acids are more efficient to decrease the MFFT of hydrophilic polymers (also called polar polymers) while long chain acids are more efficient to decrease the MFFT of hydrophobic polymers (see below the definition according to the invention).

Mixtures of different acids can be used to increase compatibility with the polymer, and thus the coalescing and plastification efficiency. The hydrophilic character of a polymer may be correlated with the solubility in water of its monomeric components. A "hydrophilic index" HI can thus be determined depending on the monomer composition and on the water solubility of each one of the monomeric components, using the below reported formula (for a copolymer of two monomers M₁ and M₂, but can be extrapolated to more than two monomers on the same principle of a calculated weight average monomeric solubility from known individual monomeric solubilities). Monomeric concentrations, lower than 2.5% by weight have not been considered.
Hydrophilic Index HI = x1*s1 + x2*s2, with :
x₁, x₂ : weight fraction of respective M₁ and M₂ monomers in the monomeric composition M₁ + M₂
s₁, s₂ : solubilities at 25°C in g/l of respective monomers M₁ and M₂

Monomeric water solubility sᵢ for a monomer Mᵢ is expressed in g/l at 25°C according to REGISTRY DATA BASE provided on line by CAS (Chemical Abstracts Series) and available on STN HOST, with calculated solubility values (g/l at 25°C) by ACD/labs Software V8.14, according to the provider.

Consequently, we may consider as "hydrophilic" (also called "polar") polymers, those with calculated HI of at least 15 g/l at 25°C and as "hydrophobic" (non polar) those with lower than 15 g/l, on the base of individual water solubilities as shown for example in Table 1, below.

**Table 1 :**

| **ACN** | **VAM** | **MA** | **MMA** | **EA** | **GMA** | **EMA** | **BA** | **BMA** | **STY** | **DBM** | **2EHA** | **DOM** |
|---|---|---|---|---|---|---|---|---|---|---|---|---|
| 99,2 | 50 | 46 | 15 | 15 | 12 | 5,1 | 1,8 | 0,64 | 0,39 | 0,16 | 0,048 | 0,00068 |

| | | | | | | | | | | | | |
|---|---|---|---|---|---|---|---|---|---|---|---|---|
| ACN : acrylonitrile, VAM : vinyl acetate, MMA : methyl methacrylate, GMA : glycidyl methacrylate, MA : methyl acrylate, EA : ethyl acrylate, EMA : ethyl methacrylate, BA : butyl acrylate, BMA : butyl methacrylate, STY : styrene, DBM : dibutyl maleate, 2EHA : 2- ethyl hexyl acrylate, DOM : di n-octyl maleate. | | | | | | | | | | | | |

Tables 2 and 3 below show the examined various polymeric dispersions a) with their corresponding HI and other characteristics (Table 2) and the added acids b) and their effect on MFFT (Table 3).

**Table 2 :**

| Polymer Dispersion a) | Monomeric Composition | Stabilisation | pH | Solids content (%) | Viscosity (mPa.s) | Tg (°C) | MFFT (°C) | Calculated Hydrophilic Index HI (g/l) |
|---|---|---|---|---|---|---|---|---|
| Craymul 1309 | 100% VAM | HEC | 4,5 | 54 | 2000 | 37 | 15 | 50 |
| Craymul 1345 S | 80% VAM | A / NI | 4,0 | 45 | 50 | 36 | 25 | 43 |
| | 20% MMA | | | | | | | |
| Craymul 4374 | 76% VAM | PVOH | 4,5 | 57 | 8000 | 23 | 13 | 38 |
| | 24% DBM | | | | | | | |
| Craymul 2741 | 50% MMA | A / NI | 8,5 | 46 | 50 | 24 | 19 | 8,4 |
| | 50% BA | | | | | | | |
| Craymul 2423 | 50% STY | A / NI | 8,0 | 50 | 10000 | 18 | 20 | 1,1 |
| | 50% BA | | | | | | | |

**Table 3 :**

| Polymer dispersion a) | Polymer dispersion a) MFFT (°C) | Acid post-addition (w/w % with respect to total a)+b)) | Mixture (a)+b)) MFFT (°C) |
|---|---|---|---|
| Craymul 1309 | 15 | 2% formic acid | 10 |
| Craymul 1345 S | 25 | 1% acetic acid | 18 |
| | | 2% acetic acid | 13 |
| | | 2% octanoic acid | 10 |
| | | 2% oleic acid | 25 |
| | | 1% acetic acid + 1% oleic acid | 14 |
| Craymul 4374 | 13 | 2% acetic acid | 2,5 |
| | | 2% octanoic acid | 1 |
| | | 2% oleic acid | 7 |
| Craymul 2741 | 19 | 2% formic acid | 12 |
| | | 2% oleic acid | 9 |
| Craymul 2423 | 20 | 1% acetic acid | 20 |
| | | 2% acetic acid | 20 |
| | | 2% octanoic acid | 0 |
| | | 2% oleic acid | 13 |

### Effect of the acid b) on MFFT, Tg and mechanical performances :

Short chain acids up to C₈ are considered to act as latent volatile organic compounds (VOC) because of their boiling point lower than 250°C. This category of acids should evaporate from the film, and will decrease the MFFT enabling improved (easy) filmification but the proper Tg of the polymer will finally recover after the evaporation (of the said acid), which is Tg value of the pure polymer without any plasticizing agent. Thus, the final Tg and global mechanical performances in the final coating are not affected by the said acid, given its latent and effective final evaporation (elimination). It can be said that short chain acids (in C₁-C₈) are acting as coalescing agents with a temporary plasticizing effect.

Acids with chain from C₉ and higher will have a higher tendency to remain in the film, so that the MFFT will be decreased but also the Tg will be permanently decreased, more or less depending on the acid used : they act as permanent plasticizers. Table 4 below shows the comparative effects of oleic acid, representing C₉-C₂₅ range, with respect to acetic and octanoic acids, for C₁-C₈ range.

**Table 4 :**

| | | Immediately | | | After ageing lweek at 60°C | | |
|---|---|---|---|---|---|---|---|
| Polymer dispersion a) | Acid post-addition (% w/w vs a)+b)) | Tg (°C) | Tensile strength (MPa) | Elongation at break (%) | Tg (°C) | Tensile strength (MPa) | Elongation at break (%) |
| Craymul 4374 | none | 23 | 13,8 | 310 | 24 | 14 | 255 |
| | 2% acetic acid | 15 | 4,5 | 485 | 20 | 11 | 305 |
| | 2% octanoic acid | 17 | 5,5 | 570 | 17 | 7 | 405 |
| | 2% oleic acid | 20 | 11 | 395 | 20 | 12,0 | 355 |

### Coalescing and plasticizing effect and pH variation :

The acid function is deemed to be responsible of the plasticizing effect, so the pH must be lower than the pKa of the acid, in order to keep the said function under its acid form and consequently resulting in plasticizing effect. This is particularly valid for short chain acids.

In the case of long chain acids, the hydrocarbon chain may contribute also to the plasticizing effect.

Comparative results are shown in Table 5, for acetic acid and oleic acid when varying the pH.

**Table 5 :**

| Polymer dispersion a) | Polymer dispersion a) MFFT (°C) | Acid post-addition (%w/w) | pH | Mixture (a)+b)) MFFT (°C) |
|---|---|---|---|---|
| Craymul 4374 | 12 | 2% acetic acid | 3,0 | 3 |
| | | 2% acetic acid | 4,4 | 10 |
| | | 2% acetic acid | 5,3 | 12 |
| | | 3,8% sodium acetate | 5,3 | 12 |
| | | 2% oleic acid | 3,8 | 7 |
| | | 2% oleic acid | 6,1 | 9 |

### Finished poly vinylacetate-based wood adhesives and characteristics :

In general, for wood adhesive application where water resistance is required, dispersions of vinyl acetate and N-methylol acrylamide are used. These copolymers containing only a small amount of N-methylol acrylamide, around 1%, are polymerised in emulsion in presence of surfactant and polyvinyl alcohol as protective colloid. The obtained copolymers are considered as hydrophilic and have a HI index over 15 g/l and generally have a Tg around 35°C and a MFFT around 15°C. MFFT is usually decreased to a temperature lower than 10°C to improve the film formation at low temperatures, by adding a coalescing agent, a commonly used being butyl diglycol acetate (BDGA). Aluminium salts are also added during the formulation of these copolymers (2% aluminium chloride is typical) to act as physical crosslinking agent between hydroxyl groups and so to increase the water resistance.

In a typical dispersion as described above, tests were done by replacing partially and totally butyl diglycol acetate by acetic acid.

**Table 6 :**

| | Coalescing agent | Weight % | MFFT (°C) | D3-3 (N/mm²) | Creep test (%) | Watt 91 (N/mm²) |
|---|---|---|---|---|---|---|
| A : typical formulation | BDGA | 2,3 | 6 | 2.1 | 30 | 6.5 |
| B : formulation according to the invention with partial replacement of BDGA by acetic acid | BDGA / CH₃COOH 50/50 | 2,3 | 6 | 2,8 | 100 | 8,2 |
| C : formulation according to the invention by totally replacing BDGA by acetic acid | CH₃COOH | 2,3 | 6 | 2.8 | 100 | 8.3 |

### Description of the tests used :

- D3-3 water resistance test
   The measures have been carried out following the EN 204 classification. Adhesive joints are obtained by gluing two beech wood specimens with a pneumatic press as reported in EN 205. A tensile strength > 2 N/mm² is required to pass the test.
- WATT 91 : Wood Adhesive Temperature Test
   This test allows to obtain the resistance to heat of non structural adhesive joints and it is described in standard EN 14257. The test is carried out on standard specimens kept for one hour at 80°C and immediately tested for tensile strength. The test is passed if tensile strength is > 7 N/mm².
- Creep Test
   The measures have been carried out following the MU 700 : 85 method.
   This test gives an indication of the resistance of a non-structural adhesive joint to static loads. The test is passed if at least 80% of the specimens resist to load after 21 days.

### Conclusion on comparative results of Table 6 :

In order to decrease their MFFT, wood glues generally contain a coalescing agent.

Following the invention, the partial or total replacement of butyl diglycol acetate by acetic acid allows to have identical MFFT and due to the higher volatility of acetic acid, an increase of mechanical performances is observed. This recovery of the intrinsic performances of the polymer allows to pass well over D3-3, creep resistance and Watt 91 tests for wood glues.

## Claims

1. An aqueous polymeric dispersion, **characterised in that**:
- it comprises :
a) at least one polymer in aqueous dispersion, having a minimum film-forming temperature (MFFT) between 0 and 100°C,
b) from 0,05 to 30% by weight with respect to the said aqueous dispersion a), of at least one organic carboxylic acid in C₁ to C₂₅, or of their mixtures
- the said organic carboxylic acid b) and its content in the said aqueous dispersion is so selected to be compatible with the said aqueous polymeric dispersion a) as such, and with the said polymer, as polymer itself,
- the said acid b) is present in its acid form.

2. Aqueous dispersion according to claim 1, **characterised in that** the said organic carboxylic acid is present at 0.05 to 15% by weight with respect to the said aqueous dispersion a).

3. Aqueous dispersion according to claim 1 or 2, **characterised in that** the said organic carboxylic acid is present at 0,05 to 5% by weight with respect to the said aqueous dispersion a).

4. Aqueous dispersion according to any one of claims 1 to 3, **characterised in that** the said organic carboxylic acid is linear.

5. Aqueous dispersion according to any one of claims 1 to 4, **characterised in that** the said organic carboxylic acid is selected from C₉ to C₂₅ acids.

6. Aqueous dispersion according to claim 5, **characterised in that** the said organic carboxylic acid is a monocarboxylic acid and is selected from :
capric, lauric, oleic, linoleic, linolenic, ricinoleic, myristoleic, palmitoleic acids.

7. Aqueous dispersion according to any one of claims 1 to 4, **characterised in that** the said organic carboxylic acid is selected from C₁₆ to C₂₅ acids.

8. Aqueous dispersion according to claims 5 to 7, **characterised in that** the said organic carboxylic acids bears at least one ethylenic unsaturation.

9. Aqueous dispersion according to any one of claims 1 to 4, **characterised in that** the said organic carboxylic acid is a binary or ternary mixture of a C₁ to C₄ acid with a C₁₆ to C₂₅ acid bearing at least one ethylenic unsaturation.

10. Aqueous dispersion according to any one of claims 1 to 4, **characterised in that** the said polymer is a hydrophilic polymer, with a hydrophilic index of at least 15 g/1.

11. Aqueous dispersion according to claim 10, **characterised in that** the said organic carboxylic acid is selected from C₁ to C₈ monocarboxylic or dicarboxylic acids, or from mixtures of a C₁ to C₄ acid with a C₁₆ to C₂₅ acid bearing at least one ethylenic unsaturation.

12. Aqueous dispersion according to claim 11, **characterised in that** the said C₁ to C₈ monocarboxylic or dicarboxylic acid is selected from : formic, acetic, valeric (pentanoic), glutaric (pentanedioic), caproic (hexanoic), octanoic, and adipic (hexanedioic).

13. Aqueous dispersion according to any one of claims 10 to 12, **characterised in that** the said organic carboxylic acid is a C₁ to C₈ acid, and **in that** the pH of the said aqueous dispersion a) is adjusted to be lower than the pKa of the said organic carboxylic acid.

14. Aqueous dispersion according to claims 10 to 13, **characterised in that** the said organic carboxylic acid is selected from : formic acid or acetic acid or propanoic acid or lactic acid.

15. Aqueous dispersion according to any one of claims 1 to 14, **characterised in that** the said aqueous polymeric dispersion a) is obtainable by emulsion polymerisation of a monomeric composition comprising at least one ethylenically unsaturated monomer.

16. Aqueous dispersion according to claim 15, **characterised in that** the said ethylenically unsaturated monomers are selected from :
- (meth)acrylic acid esters of C₁ to C₁₈ monoalcohols, or
- methacrylate diesters or monoesters of C₂ to C₆ diols, or
- urethane acrylates, or epoxy acrylates, or polyester or polyether acrylates,
- functional monomers from : (meth)acrylic acid or anhydride, (meth)acrylamide, glycidyl (meth)acrylate, vinyl glycidyl ether, methylol acrylamide, acetoacetoxy ethyl (meth)acrylate, diacetone acrylamide, diacetone (meth)acrylate, (meth)acrylonitrile, itaconic acid or anhydride, maleic acid or anhydride, fumaric acid,
- olefins from : ethylene
- vinyl alcohol esters from : vinyl acetate, vinyl versatates, vinyl propionate, vinyl butyrate, vinyl acetoacetate, allyl acetoacetate,
- vinyl aromatic monomers, or
- maleates esters of C₂ to C₁₀ alcohols.

17. Aqueous dispersion according to any one of claims 1 to 16, **characterised in that** the said polymer is based on either homopolymers of acrylic monomers and/or on copolymers of only acrylic monomers or on styrene-acrylic copolymers or on purely vinyl ester (vinyl alcohol esters) homopolymers and/or copolymers.

18. Aqueous dispersion according to any one of claims 15 to 17, **characterised in that** the said polymer is at least one of the homopolymers of vinyl esters selected from vinyl acetate or vinyl propionate or vinyl butyrate or vinyl versatate and/or at least one copolymer of the same vinyl esters with at least one from : maleate comonomers or acrylic comonomers or ethylene.

19. Aqueous dispersion according to any one of claims 15 to 18, **characterised in that** the said aqueous polymeric dispersion a) is stabilized with either one protective colloid, selected from : partly or completely hydrolysed polyvinyl acetate (polyvinyl alcohol), cellulose derivatives and/or with at least one surfactant selected from anionic and/or non-ionic surfactants.

20. Aqueous dispersion according to any one of claims 15 to 19, **characterised in that** the said polymer is hydrophilic and selected from vinyl acetate homopolymers and/or from vinyl acetate copolymers with predominant vinyl acetate content or from acrylic homopolymers and/or copolymers.

21. Process of preparation of the aqueous dispersion as defined according to any one of claims 1 to 20, **characterised in that** it comprises the steps of :
i) preparing an aqueous polymeric dispersion as defined in any one of claims 1 to 20, either by emulsion polymerisation or by dispersing in water a preformed polymer,
ii) adding in the said aqueous polymeric dispersion at least one organic carboxylic acid b) as defined according to any one of claims 1 to 19, with, when the said acid is a solid at room temperature, heating it to a liquid state before adding it at the same temperature, to the preheated aqueous dispersion a), or optionally previously to adding it, diluting it in water,
iii) mixing the aqueous dispersion a) with acid b), to obtain an homogeneous aqueous dispersion,
iv) optionally, adjusting the pH of the aqueous polymeric dispersion a), to favour the acid form of the said organic carboxylic acid b).

22. End-use composition, **characterised in that** it comprises at least one aqueous polymeric dispersion as defined according to any one of claims 1 to 20, or obtainable by a process as defined according to claim 21.

23. Composition according to claim 22, **characterised in that** it is an aqueous paint or varnish or ink or glue or adhesive or a fibre sizing composition or a leather or a textile treatment composition or a protective food coating composition.

24. Composition according to claim 22, **characterised in that** the said aqueous dispersion is as defined according to claim 14.

25. Composition according to claim 24, **characterised in that** it is an adhesive or glue composition for wood or it is a food coating composition.

26. Composition according to claim 22, **characterised in that** the said aqueous dispersion is as defined according to any one of claims 5 to 9.

27. Composition according to claim 26, **characterised in that** it is a packaging adhesive composition, a fibre sizing composition, a textile or a leather treatment composition.

28. Composition according to claim 26, **characterised in that** it is a removable protective coating composition.

29. Composition according to claim 28, **characterised in that** it is for food coating or packaging or for temporary specific substrate protection.

30. Use of at least one aqueous dispersion as defined according to any one of claims 1 to 20, **characterised in that** it is in : aqueous paints, varnishes, inks, glues, adhesives, fibre sizing compositions or textile or leather treatment compositions, food coatings or packagings or in a specific substrate temporary protection.

31. Use according to claim 30, **characterised in that** the said aqueous dispersion is as defined according to claim 14 and **in that** the said use is in aqueous adhesive compositions or glue compositions for wood or in a food coating composition.

32. Use according to claim 30, **characterised in that** the said aqueous composition is as defined according to any one of claims 5 to 9 and **in that** the said use is either in packaging adhesives or in removable protective coatings.

33. Coated or treated substrate as resulting from the application and filmification of at least one layer of at least one end-use composition as defined according to any one of claims 22 to 29 on the said substrate.

34. Substrate as defined according to claim 33, **characterised in that** it is selected from : wood, metal, plastic, paper, cardboard, glass, leather, textile, or natural or synthetic fibres or food.

35. A removable protective coating, **characterised in that** it results from the application and filmification of at least one layer of at least one end-use protective coating composition, comprising an aqueous dispersion as defined according to any one of claims 5 to 9.
